# EUROPÄISCHE PATENTANMELDUNG

(11) **EP 1 847 895 A1**
(43) Veröffentlichungstag der Anmeldung: **24.10.2007**
(21) Anmeldenummer: 07006123.9
(22) Anmeldetag: 24.03.2007
(51) Int. Cl.: G05B 19/418, B65D 21/00

(54) **Verfahren und System zum distribuieren von Getränken in Mehrwegflaschen**

(30) Priorität: 21.04.2006 DE 102006019563
(71) Anmelder: Logipack GmbH, 18439 Stralsund (DE)
(72) Erfinder: Nordmann, Jürgen, 18573 Rambin (DE)
(74) Vertreter: Hauck Patent- und Rechtsanwälte

(57) **Zusammenfassung**

Verfahren zum Distribuieren von Getränken in Mehrwegflaschen, bei dem
a.1. in mindestens einer Abfüll- und Verpackungsstation Getränke in standardisierte Mehrwegflaschen gefüllt,
a.2. die Mehrwegflaschen in herstellerindividualisierte Umverpackungen verpackt,
a.3. die Umverpackungen auf standardisierte Träger gesetzt und
a.4. die Träger zu Vollgutstapeln übereinandergestapelt werden,
a.5. die Vollgutstapel von der mindestens einen Abfüll- und Verpackungsstation zu mindestens einem Zentrallager transportiert werden,
a.6. die Vollgutstapel von dem mindestens einen Zentrallager zu Verkaufsstellen transportiert werden,
a.7. die Vollgutstapel in den Verkaufsstellen aufgestellt werden, so daß Verbraucher Umverpackungen mit Mehrwegflaschen mitnehmen und geleerte Mehrwegflaschen in und/oder ohne Umverpackungen zurückbringen können,
a.8. in den Verkaufsstellen die geleerten Mehrwegflaschen in Umverpackungen und/oder ohne Umverpackungen auf Träger gesetzt werden und die Träger zu Leergutstapeln übereinander gestapelt werden,
a.9. die Leergutstapel von den Verkaufsstellen zu dem mindestens einen Zentrallager transportiert werden und
a.10. die Leergutstapel von dem mindestens einen Zentrallager zu der mindestens einen Abfüll- und Verpackungsstation transportiert werden.

## Beschreibung

Die Erfindung bezieht sich auf ein Verfahren und auf ein System zum Distribuieren von Getränken (z.B. Bier, Wasser, Fruchtsäfte, Softdrinks) in Mehrwegflaschen.

Bei der herkömmlichen Distribution von Getränken in Mehrwegflaschen werden in Brauereien Getränke in Flaschen abgefüllt. Die Flaschen werden in Getränkekästen eingestellt. Die Getränkekästen werden auf Europaletten gestapelt. Gegebenenfalls werden danach Flaschen den Kästen entnommen, in Umver-packungen aus Karton verpackt und die Flaschen in den Umverpackungen in die Kästen zurückgesetzt.

Die Kästen mit den enthaltenen Flaschen werden auf den Europaletten von den Brauereien zu den Zentrallagern des Handels und zum Getränkefachgroßhandel transportiert. Von den Zentrallagern des Handels werden sie zu den Handelsfilialen gebracht. Vom Getränkefachgroßhandel gelangt das Vollgut an die Gastronomie, Tankstellen, den Lebensmitteleinzelhandel und den freien Lebensmitteleinzelhandel (Kioske etc.).

In den obigen Verkaufsstellen werden die Flaschen in den Kästen oder Flaschen enthaltende Umverpackungen oder einzelne Flaschen zum Verkauf angeboten.

Der Verbraucher kauft einzelne Flaschen, mit Flaschen befüllte Umverpackungen oder Kästen. Er bringt das Leergut zu den Verkaufsstellen zurück, wo es in Kästen gesammelt wird.

Von den Verkaufsstellen wird das Leergut zu den Zentrallagern des Handels und zum Getränkefachgroßhandel zurücktransportiert. Von dort wird es zu den Brauereien zurückgebracht, wo die Flaschen nach Reinigung und gegebenenfalls Etikettierung erneut befüllt werden und der Warenkreislauf von vom beginnt.

In diesem Warenkreislauf werden von den Brauereien teilweise verschiedene Mehrwegflaschentypen verwendet, die sich insbesondere hinsichtlich der Farbe, der Form bzw. des Verschlusses unterscheiden zu können. Ferner verwenden die Brauereien herstellerindividualisierte Kästen, insbesondere weil die Brauereien individuell gekennzeichnete (mit Marken bzw. Werbung versehene) und teilweise verschieden formgestaltete Kästen einsetzen. Deshalb muß das Leergut herstellersortenrein sortiert werden, bevor es zu den Brauereien zurücktransportiert wird. In der Regel erfolgt diese aufwendige Sortierung in den Zentrallagern des Handels und beim Getränkefachgroßhandel.

Die Präsentation der Ware in Kästen ist nicht besonders verkaufsfördernd, da die Kästen die Ware verdecken. Außerdem haben die Kästen einen großen Platzbedarf. In der Regel werden sie in speziell eingerichteten Getränkeabteilungen der Verkaufsstellen angeboten und gelagert. Auch der Transport von Kästen und einzelnen Flaschen durch den Verbraucher ist verbraucherunfreundlich. Umverpackungen aus Karton sind vielfach unvollständig, da einzelne Flaschen entnommen werden.

Davon ausgehend liegt der Erfindung die Aufgabe zugrunde, ein den Aufwand für den Transport und die Präsentation von Mehrwegflaschen minderndes Verfahren und System zum Distribuieren von Getränken in Mehrwegflaschen zur Verfügung zu stellen.

Die Aufgabe wird durch ein Verfahren mit den Merkmalen des Anspruches 1 und durch ein System mit den Merkmalen des Anspruchs 37 gelöst.

Das erfindungsgemäße Verfahren zum Distribuieren von Getränken in Mehrwegflaschen umfaßt folgende Schritte:
a.1. in mindestens einer Abfüll- und Verpackungsstation werden Getränke in standardisierte Mehrwegflaschen gefüllt,
a.2. die befüllten Mehrwegflaschen in herstellerindividualisierten Umverpackungen verpackt,
a.3. die Umverpackungen mit den darin enthaltenen Mehrwegflaschen auf standardisierte Träger gesetzt und
a.4. die Träger mit den darauf gesetzten Umverpackungen und den darin enthaltenen, befüllten Mehrwegflaschen zu Vollgutstapeln übereinander gestapelt,
a.5. die Vollgutstapel werden von der mindestens einen Abfüll- und Verpackungsstation zu mindestens einem Zentrallager transportiert,
a.6. die Vollgutstapel werden von dem mindestens einen Zentrallager zu verschiedenen Verkaufsstellen transportiert,
a.7. die Vollgutstapel werden in den Verkaufsstellen aufgestellt, so daß Verbraucher Umverpackungen mit den darin enthaltenen Mehrwegflaschen von den Trägem ab- und mitnehmen können und Verbraucher geleerte Mehrwegflaschen in Umverpackungen und/oder ohne Umverpackungen zu Verkaufsstellen zurück bringen können,
a.8. in den Verkaufsstellen werden die geleerten Mehrwegflaschen in den Umverpackungen und/oder ohne Umverpackungen auf Träger gesetzt und die Träger mit den darauf gesetzten geleerten Mehrwegflaschen in Umverpackungen und/oder ohne Umverpackungen werden zu Leergutstapeln übereinandergestapelt,
a.9. die Leergutstapel werden von den Verkaufsstellen zu dem mindestens einen Zentrallager transportiert und
a.10. die Leergutstapel werden von dem mindestens einen Zentrallager zu der mindestens einen Abfüll- und Verpackungsstation transportiert.

Das erfindungsgemäße System zum Distribuieren von Getränken in Mehrwegflaschen ist geeignet zur Durchführung des erfindungsgemäßen Verfahrens. Es umfaßt:
b.1. standardisierte Mehrwegflaschen,
b.2. standardisierte Träger,
b.3. herstellerindividualisierte Umverpackungen,
b.4. mindestens eine Abfüll- und Verpackungsstation mit Einrichtungen zum Befüllen von standardisierten Mehrwegflaschen mit Getränken, Verpacken der befüllten Mehrwegflaschen in herstellerindividualisierte Umverpackungen, Setzen der Umverpackungen mit den darin enthaltenen Mehrwegflaschen auf standardisierte Träger und Stapeln der Träger mit den darauf gesetzten Umverpackungen und den darin enthaltenen Mehrwegflaschen zu Vollgutstapeln,
b.5. mindestens ein Zentrallager,
b.6. Einrichtungen zum Transportieren von Vollgutstapeln von der mindestens einen Abfüll- und Verpackungsstation zu dem mindestens einen Zentrallager,
b.7. verschiedene Verkaufsstellen,
b.8. Einrichtungen zum Transportieren von Vollgutstapeln von dem mindestens einen Zentrallager zu den Verkaufsstellen,
b.9. Einrichtungen zum Transportieren von Leergut enthaltenen Leergutstapeln von den Verkaufsstellen zu dem mindestens einen Zentrallager und
b.10. Einrichtungen zum Transportieren von Leergutstapeln von dem mindestens einen Zentrallager zu der mindestens einen Abfüll- und Verpackungsstation.

Mit dem Begriff "Zentrallager" sind zusammenfassend die Zentrallager des Handels und die Getränkefachgroßhändler bezeichnet. Die "Vollgutstapel" und "Leergutstapel" sind nachfolgend teilweise auch als "Stapel" bezeichnet. Die "Mehrwegflaschen" sind nachfolgend teilweise auch als "Flaschen" bezeichnet.

Bei dem erfindungsgemäßen Verfahren und System erfolgt der Transport des Vollgutes und des Leerguts sowie die Präsentation der Ware in den Stapeln. Die Ware ist in den Stapeln aufgrund der guten Sichtbarkeit der herstellerindividualisierten Umverpackungen bzw. Erfaßbarkeit von Strichcodes leicht identifizierbar, wodurch die Verteilung der Ware vereinfacht wird. Ferner sind die Stapel in den Verkaufsstellen als Regale benutzbar. Der Stapel kann mit geringer Vorbereitung in ein Verkaufsregal umgewandelt werden. Hierfür muß nur ein gegebenenfalls zur Stabilisierung beim Transport oben auf dem Stapel angeordneter Träger bzw. jeder entleerte Träger abgenommen werden. Auf bzw. zwischen den Trägern sind die herstellerindividualisierten Umverpackungen sehr gut sichtbar.

Die Herstellerindividualisierung kann sich auf eine bestimmte Brauerei oder Eigenmarke des Handels beziehen. Die Umverpackungen fungieren als mobiles Display. Insgesamt wird die Ware in besonders verkaufsfördernder Weise präsentiert. Eine platzsparende Anordnung der Stapel auch im Regal- oder im Kassenbereich von Handelsfilialen ist möglich. Gegebenenfalls ist die Ware in den Umverpackungen leicht in stationäre Regale umsetzbar. Entleerte Träger sind platzsparend stapelbar, um später für die Aufnahme von Leergut bereitgehalten zu werden. Der Platzbedarf für die Stapel aus leeren Trägern ist im Vergleich zu leeren Kästen sehr gering.

Der Verbraucher nimmt die Mehrwegflaschen in den leicht transportablen Umverpackungen mit nach Hause. Er setzt die Umverpackungen gegebenenfalls für den Rücktransport des Leergutes zu den Verkaufsstellen ein. Entsprechend ausgestaltete Umverpackungen sind Mehrwegverpackungen, für die besonderen Rücknahme- und Recyclingmaßnahmen für Verpackungsmüll entfallen.

Da standardisierte bzw. vereinheitlichte Mehrwegflaschen und standardisierte bzw. vereinheitlichte Träger verwendet werden, kann das Leergut von jeder Abfüll- und Verpackungsstation angenommen werden. So kann Leergut von verschiedenen Zentrallagern aus zu derselben Abfüll- und Verpackungsstation oder - falls mehrere Abfüll- und Verpackungsstationen etabliert sind - zu wahlfreien Abfüll- und Verpackungsstationen geliefert werden. Dies ermöglicht eine beträchtliche Reduzierung der Transportwege. Der Transportaufwand ist durch die Nutzung der wiederverwendbaren Träger für den Transport des Vollgutes, des Leergutes sowie für die Lagerung und Präsentation gering.

Bevorzugt umfaßt das Verfahren und System mehrere Abfüll- und Verpackungsstationen und mehrere Zentrallager, wobei die Abfüll- und Verpackungsstationen bevorzugt durch mehrere Brauereien beliefert werden. Dann ist der Transportaufwand besonders gering.

Das erfindungsgemäße Verfahren und System kann neben dem existierenden Verfahren und System basierend auf dem Einsatz von Kisten und Paletten im Mehrwegbereich im Einzelhandel etabliert werden oder existierende Verfahren und Systeme ablösen. Die Etablierung eines weiteren bzw. neuen Verfahrens und Systems geht einher mit der Harmonisierung der Artikelstammdaten und Systeminformationen für Träger und Umverpackungen sowie die unten noch näher erläuterten fahrbaren Untersätze und Adapterpaletten sowie für die Warengruppe, Herstellerangaben, Abmessungen, Gewichte und Verpackungsanlagen. Diese Informationen sind neu und als Basis in die Warenwirtschaftssysteme der Hersteller, des Getränkefachgroßhandels, des Lebensmittelhandels, der Tankstellenzentralen und weiterer Marktteilnehmer zu implementieren. Greifen die Marktteilnehmer auf einheitliche Stammdaten zurück, verfügen sie über einheitliche Artikelinformationen, wodurch der Austausch von Daten zwischen den Marktteilnehmern vereinfacht und beschleunigt wird. Auf diese Weise etabliert sich ein neues Verfahren und System zum Distribuieren von Getränken in Mehrwegflaschen in der Getränkewirtschaft.

Insgesamt wird erfindungsgemäß der Aufwand für das Distribuieren von Getränken in Mehrwegflaschen beträchtlich gesenkt, wobei eine besonders verkaufsfördernde Präsentation und verbraucherfreundliche Konfektionierung der Ware erreicht wird.

Die Benutzung des erfindungsgemäßen Verfahrens und Systems kann durch eine oder durch mehrere zusammen- oder parallel nebeneinander arbeitende Benutzer (z.B. Unternehmen) erfolgen. Gegenstand der Erfindung sind auch Teile des Verfahrens und des Systems, die nur bei einem von mehreren Benutzern benutzt werden. So ist Gegenstand der Erfindung auch ein Verfahren, das die Schritte a.1. bis a.4. und gegebenenfalls a.5. und/oder a.10. aufweist, deren Benutzung z.B. in der Hand einer Brauerei oder eines Getränkefachgroßhändlers oder eines anderen Benutzers liegt. Bei Ausführung durch einen Getränkefachgroßhändler können gegebenenfalls noch die Schritte a.6. und a.9. hinzukommen. Die Schritte a.5. und/oder a.10. bzw. a.6. und/oder a.9. werden gegebenenfalls von einem weiteren Benutzer ausgeführt (z.B. von einem Spediteur) und gehören deshalb nicht zwingend zu dem vorgenannten Verfahren. Ferner ist Gegenstand der Erfindung auch ein Verfahren mit den Merkmalen a.6. bis a.9. und gegebenenfalls a.5. und/oder a.10., die in der Hand eines weiteren Benutzers liegen können, der z.B. ein Händler ist, der mindestens ein Zentrallager und Verkaufsstellen betreibt.

Ferner ist Gegenstand des erfindungsgemäßen Systems ein System mit den Merkmalen b.1. bis b.4. und gegebenenfalls b.6. und/oder b.10., die z.B. von einer Brauerei oder einem Getränkefachgroßhändler oder einem anderen Benutzer benutzt werden. Bei Ausführung durch einen Getränkefachgroßhändler können gegebenenfalls die Merkmale b.8. und b.9. hinzukommen. Die Merkmale b.6. und/oder b.10. bzw. b.8. und b.9. können gegebenenfalls von einem anderen Benutzer, z.B. von einem Spediteur, benutzt werden. Des weiteren ist Gegenstand der Erfindung auch ein System mit den Merkmalen b.1. bis b.3., b.5., b.7. und gegebenenfalls b.6. und/oder b.8. und/oder b.9. und/oder b.10., die in der Hand eines weiteren Benutzers liegen können, der z.B. ein Händler ist, der mindestens ein Zentrallager und Verkaufsstellen betreibt.

Gemäß einer Ausgestaltung der Erfindung werden Getränke in mindestens einer Abfüll- und Verpackungsstation auf Anforderung von mindestens einem Zentrallager in Mehrwegflaschen gefüllt, verpackt und in Vollgutstapeln zusammengestellt und zu mindestens einem Zentrallager transportiert. Die Anforderung kann sich insbesondere auf die Menge, die Sorte und den Hersteller der Getränke beziehen. Entsprechend der Anforderung werden dann die Getränke von der mindestens einen Abfüll- und Verpackungsstation an das mindestens eine Zentrallager geliefert. Die Anforderung kann durch elektronische Datenübertragung und ihre Bearbeitung kann vollautomatisch erfolgen.

Gemäß einer weiteren Ausgestaltung werden die Leergutstapel auf Anforderung mindestens eines Zentrallagers von dem Zentrallager zu mindestens einer Abfüll- und Verpackungsstation transportiert. Die Anforderung der Leergutstapel kann ebenfalls durch elektronische Datenübertragung erfolgen und vollautomatisch ausgelöst werden, in Abhängigkeit von den Lagerbeständen des Zentrallagers.

Gemäß einer weiteren Ausgestaltung liefert mindestens eine Brauerei auf Anforderung mindestens einer Abfüll- und Verpackungsstation Getränke an die mindestens eine Abfüll- und Verpackungsstation. Die Anforderung kann ebenfalls über elektronische Datenübertragung erfolgen. Ferner kann sie automatisch in Abhängigkeit vom Bedarf der Abfüll- und Verpackungsstation generiert werden. Ferner kann sie automatisch die Lieferung von Getränken auslösen.

Gemäß einer Ausgestaltung weist mindestens eine Brauerei eine Abfüll- und Verpackungsstation auf. Getränke aus dieser Brauerei können somit direkt nach dem Produktionsprozeß in Mehrwegflaschen abgefüllt, die befüllten Mehrwegflaschen in Umverpackungen verpackt, die Umverpackungen auf standardisierte Träger gesetzt und die Träger mit den darauf gesetzten Umverpackungen zu Vollgutstapeln aufeinandergestapelt werden. Die Vollgutstapel werden zu dem mindestens einen Zentrallager transportiert. Leergutstapel werden von dem mindestens einen Zentrallagern zu der mindestens einen Brauerei mit einer Abfüll- und Verpackungsstation zurückgebracht.

Gemäß einer bevorzugten Ausgestaltung werden die Getränke von einer oder mehreren Brauereien zu mindestens einer übergeordneten Abfüll- und Verpackungsstation transportiert. Bei dieser Ausgestaltung werden in der mindestens einen übergeordneten Abfüll- und Verpackungsstation die Getränke einer oder mehrerer Brauereien in Mehrwegflaschen abgefüllt, die befüllten Mehrwegflaschen in Umverpackungen verpackt, die Umverpackungen auf standardisierte Träger gesetzt und die Umverpackungen mit den Mehrwegflaschen zu Vollgutstapeln übereinandergestapelt. Hierdurch kann in den Brauereien der Anlagenaufwand für das Abfüllen und Verpacken von Getränken vermieden bzw. reduziert werden. Außerdem wird eine weitere Reduzierung des Transportaufwandes erreicht, weil die Getränke zu der mindestens einen übergeordneten Abfüll- und Verpackungsstation ohne Flaschen, Umverpackungen und Träger transportiert werden können und die Vollgutstapel unter Minderung des Transportaufwandes lediglich von der mindestens einen übergeordneten Abfüll- und Verpackungsstation zu dem mindestens einen Zentrallager und von dort zu den Verkaufsstellen transportiert werden müssen. Umgekehrt müssen die Leergutstapel lediglich von den Verkaufsstellen zu dem mindestens einen Zentrallager und von dort zu der mindestens einen übergeordneten Abfüll- und Verpackungsstation transportiert werden. Hierdurch werden beträchtliche Einsparungen an Transportkapazität und Treibstoff erreicht und Umweltbelastungen durch Emissionen von CO₂ und Feinstaub reduziert. Außerdem werden Transportkosten eingespart.

Für den Transport der Getränke von der mindestens einen Brauerei zu der mindestens einen Abfüll- und Verpackungsstation kommen verschiedene Möglichkeiten in Betracht. Beispielsweise ist der Transport durch eine Pipeline möglich, insbesondere wenn sich eine Brauerei in der Nähe einer Abfüll- und Verpackungsstation befindet. Gemäß einer Ausgestaltung werden die Getränke in Tanks von der mindestens einen Brauerei zu mindestens einer übergeordneten Abfüll- und Verpackungsstation transportiert. Die Tanks können beispielsweise Tanks von Tankwaggons für den Transport auf der Schiene sein. Gemäß einer anderen Ausgestaltung werden die Getränke mittels Tankwagen auf der Straße transportiert.

Gemäß einer besonders vorteilhaften Ausgestaltung ist die mindestens eine übergeordnete Abfüll- und Verpackungsstation in der Nähe mindestens eines Zentrallagers angeordnet. Hierdurch wird der Aufwand für den Transport des Vollgutes von der Abfüll- und Verpackungsstation zu dem mindestens einen Zentrallager und des Leergutes von dem mindestens einen Zentrallager zurück zu der Abfüll- und Verpackungsstation weiter reduziert. Die Zentrallager des Lebensmitteleinzelhandels befinden sich vielfach in Gebieten mit hoher Bevölkerungsdichte bzw. Ballungszentren, da dort die Hauptwaren- und Leergutströme verlaufen. Hieran knüpft die Erfindung in vorteilhafter Weise an, indem die mindestens eine Abfüll- und Verpackungsstation in einem Gebiet mit besonders hoher Konzentration der Zentrallager bzw. hoher Bevölkerungsdichte angeordnet ist. Die mindestens eine Abfüll- und Verpackungsstation ist hierzu gemäß einer weiteren Ausgestaltung so angeordnet, daß sich mehrere Zentrallager in einem Umkreis von 100 km, bevorzugt von 50 km, noch bevorzugter von 25 km und noch bevorzugter von 10 km um die übergeordnete Abfüll- und Verpackungsstation befinden. Die Erfindung bezieht mögliche Ausgestaltungen ein, bei denen mindestens ein Zentrallager eine Abfüll- und Verpackungsstation aufweist. Infolgedessen kann ein Transport von Vollgut und Leergut von der Abfüll- und Verpackungsstation zu diesem Zentrallager entfallen, falls die Getränke direkt von der Abfüll- und Verpackungsstation aus zu den Verkaufsstellen transportiert werden. Gegebenenfalls wird das Vollgut von der Abfüll- und Verpackungsstation des Zentrallagers zu einem Zwischenlager des Zentrallagers bzw. das Leergut von dem Zwischenlager des Zentrallagers zur Abfüll- und Verpackungsstation des Zentrallagers transportiert.

Gemäß einer Ausgestaltung haben die standardisierten Mehrwegflaschen ein Füllvolumen von 0,33 Litern und/oder 0,5-Litern. Die gängigen Flaschengrößen sind damit in die Distribution einbezogen.

Gemäß einer Ausgestaltung weisen die standardisierten Flaschen herstellerindividualisierte Etiketten auf. Die Etiketten sind z.B. durch die Darstellung von Marken und/oder Werbung ("Branding") und/oder durch Formgestaltung und/oder Anordnung herstellerindividualisiert. Bei einer Verwendung derselben Mehrwegflaschen durch einen anderen Hersteller ist es möglich, alte Etiketten zu überkleben. Gemäß einer Ausgestaltung sind die Etiketten ablösbar. Beim Reinigen des Leergutes können die Etiketten abgelöst und vom Abfüller durch neue Etiketten ersetzt werden. Gemäß einer Ausgestaltung sind die Flaschen aus Glas und/oder aus Kunststoff und/oder Einwegglas.

Eine Ausgestaltung umfaßt Umverpackungen mit einem Traggriff. Der Traggriff erleichtert dem Verbraucher das Tragen der Umverpackungen bei der Mitnahme von Vollgut von der Verkaufsstelle nach Hause bzw. beim Rücktragen des Leerguts zur Verkaufsstelle. Auch ist der Traggriff nützlich, falls Umverpackungen in den Verkaufsstellen umzusortieren sind, z.B. in einem feststehenden Regal oder eine besondere Präsentationsvorrichtung.

Eine Ausgestaltung umfaßt entnahmegesicherte Umverpackungen. Entnahmegesicherte Umverpackungen verhindern die Entnahme einzelner Flaschen aus den Umverpackungen, welche insbesondere die Abrechnung erschwert, weil die automatisch erfaßbaren Preisangaben (z.B. Strichcodes) auf den Umverpackungen nicht mehr zutreffen.

Eine Ausgestaltung umfaßt Umverpackungen, die die oberen Bereiche der Mehrwegflaschen nicht bedecken. Die oberen Bereiche der Mehrwegflaschen sind z.B. die Flaschenverschlüsse und die Flaschenhälse. Diese Ausgestaltung spart Verpackungsmaterial ein. Außerdem begünstigt sie die Verankerung der oberen Bereiche bzw. Kopfbereiche der Flaschen an der mit entsprechenden Aufnahmen versehenen Unterseite eines auf die oberen Bereiche gesetzten Trägers.

Eine Ausgestaltung umfaßt körbchenartige Umverpackungen. Körbchenartige Umverpackungen sind besonders verbraucherfreundlich, weil sie bequem getragen werden können, ohne dass Flaschen herausfallen, und auch für das sichere Einstellen und Rücktragen von Mehrwegflaschen verwendbar sind. Gemäß einer Ausgestaltung weisen die Umverpackungen Gefache auf, welche die Flaschen voneinander trennen, sodass beim Tragen Glaskontakt vermieden wird.

Die körbchenartigen Umverpackungen ("open basket carrier") können nicht entnahmegesichert und/oder entnahmegesichert sein. Nicht entnahmegesicherte körbchenartige Umverpackungen sind z.B. in der DE 298 10 833 U1, DE 299 11 034 U1 und DE 201 08 181 U1 beschrieben. Eine Entnahmesicherung ist z.B. verwirklicht durch Laschen mit Durchstecköffnungen für die Flaschenhälse, die am oberen Rand der Öffnungen der Körbchen befestigt sind. Eine entnahmegesicherte, körbchenartige Umverpackung ist Gegenstand der deutschen Patentanmeldung 10 2006 010 294.0 und der europäischen Patentanmeldung 07 004 325.2, deren die Entnahmesicherung betreffende Inhalte durch Bezugnahme in die vorliegende Anmeldung einbezogen werden.

Die Herstellerindividualisierung der Umverpackungen kann auf verschiedene Weisen ausgeführt sein. Eine Ausgestaltung umfaßt Umverpackungen, die einen individuellen Aufdruck des Herstellers der Getränke aufweisen, die in Mehrwegflaschen in den Umverpackungen verpackt werden. Der Aufdruck umfaßt z.B. eine Marke und/oder eine Werbung ("Branding"). Eine Ausgestaltung umfaßt Umverpackungen, die eine Formgestaltung aufweisen, die individuell für den Hersteller der Getränke ist, die in Mehrwegflaschen in den Umverpackungen verpackt werden. Die Formgestaltung betrifft z.B. die Gestaltung des Griffbereichs des Körbchens und/oder die Gestaltung der Entnahmesicherung des Körbchens und/oder den Verlauf der oberen Begrenzungen der Öffnungen des Körbchens und/oder die Anzahl der in der Umverpackung angeordneten Mehrwegflaschen etc.

Eine weitere Ausgestaltung umfaßt Umverpackungen mit vier und/oder sechs und/oder acht und/oder zehn und/oder zwölf Flaschen.

Für die Umverpackung können verschiedene Materialien verwendet werden, insbesondere faltbare Flachmaterialien. Einsetzbar ist insbesondere Kunststoff und/oder Pappe und/oder Karton. Bevorzugt sind die Umverpackungen aus Karton hergestellt. Zum Verbinden verschiedener Teile der Umverpackungen sind z.B. Verhakungen und/oder Verklebungen und/oder Heftverbindungen einsetzbar.

Eine Ausgestaltung umfaßt Träger mit einer Höhe von maximal etwa 5 cm. Zwischen den Trägem ist besonders viel Freiraum für die Sicht auf die Umverpackungen. Auf den Umverpackungen dargestellte Marken bzw. Werbung bzw. Strichcodes ist von außen sehr gut erkennbar.

Eine Ausgestaltung umfaßt Träger, die an der Oberseite Aufnahmen für Bodenbereiche von Flaschen und an der Unterseite Aufnahmen für Kopfbereiche von Flaschen aufweisen. Durch die Anordnung der Flaschen mit den Boden- und Kopfbereichen in Aufnahmen der darunter und darüber angeordneten Träger wird der Stapel aus Trägern und Flaschen stabilisiert. Dies gilt auch für den Vollgutstapel, bei dem die Flaschen in Umverpackungen angeordnet sind, falls die Umverpackungen so an die Flaschen angepaßt sind, dass sie deren Anordnung in den Aufnahmen nicht stören bzw. die Aufnahmen an der Oberseite der Träger auch Bodenbereiche von Umverpackungen und/oder die Aufnahmen an der Unterseite der Träger auch Kopfbereiche von Umverpackungen aufnehmen können. Das Leergut kann mit oder ohne Umverpackungen auf den Trägern im Leergutstapel angeordnet sein.

Eine Ausgestaltung umfaßt Träger mit zueinander komplementären Oberseiten und Unterseiten, die entleert in stabilen bzw. hohen Stapeln aufeinander stapelbar sind, insbesondere wenn sie ineinandergreifen.

Eine Ausgestaltung umfaßt Hartwall®-Träger. Hartwall®-Träger sind spezielle Träger, die die obigen Anforderungen erfüllen. Derartige Träger sind z.B. in der EP 0 853 053 A1 und in der EP 1 593 608 A1 beschrieben.

Eine Ausgestaltung umfaßt Träger, auf denen nur eine Sorte Umverpackungen angeordnet ist. Beispielsweise sind auf den Trägern ausschließlich Sechserpackungen angeordnet. Eine andere Ausgestaltung umfaßt Träger, auf denen verschiedene Sorten Umverpackungen angeordnet sind. Bei Anordnung von Umverpackungen mit verschiedenen Anzahlen Flaschen auf demselben Träger kann der Verbraucher von einem Träger eine Umverpackung geeigneter Größe auswählen.

Eine Ausgestaltung umfaßt Stapel, in denen nur eine Sorte Umverpackungen angeordnet ist. Hierbei besteht z.B. die Möglichkeit, in verschiedenen Stapeln Umverpackungen mit verschiedenen Anzahlen Flaschen anzubieten. Insbesondere für eine größere Filiale kann es vorteilhaft sein, Umverpackungen mit verschiedenen Anzahlen Flaschen in verschiedenen Stapeln anzubieten. Eine Ausgestaltung umfaßt Stapel, in denen mehrere Sorten Umverpackungen angeordnet sind. Insbesondere für eine kleinere Filiale kann es vorteilhaft sein, die Umverpackungen mit verschiedenen Anzahlen Flaschen in denselben Stapeln anzubieten.

Eine Ausgestaltung umfaßt Stapel mit vier bis acht Trägern, insbesondere sechs Trägern. Gemäß einer Ausgestaltung wird der obere Träger nicht mit Umverpackungen bestückt. Er dient bei Transport und Lagerung als Abschluß, um den Stapel zu stabilisieren.

Eine Ausgestaltung umfaßt Stapel auf fahrbaren bzw. rollbaren Untersätzen. Die rollbaren Untersätze ermöglichen ein leichtes Verlagern der Stapel auf Einrichtungen zum Transportieren (z.B. LKW mit oder ohne Hebebühne) für den Transport von der mindestens einen Abfüll- und Verpackungsstation über das mindestens eine Zwischenlager zu den Verkaufsstellen und zurück bzw. in den Verkaufsstellen. Insbesondere kann die Ware auf den rollbaren Untersätzen bequem aus Warenlagern in die Verkaufsräume der Verkaufsstellen gefahren werden. Dies erleichtert insbesondere das Aufstellen und Nachfüllen der Stapel.

Eine Ausgestaltung umfaßt Stapel, die auf Paletten angeordnet sind. Die Paletten mit den darauf angeordneten Stapeln sind von der mindestens einen Abfüll- bzw. Verpackungsstation zu dem mindestens einen Zentrallager und/oder von dem mindestens einen Zentrallager zu den Verkaufsstellen transportierbär. Die Paletten sind z.B. Europaletten oder Düsseldorfer Paletten bzw. weisen die für den Transport von Europaletten oder Düsseldorfer Paletten maßgeblichen Abmessungen auf. Europaletten haben etwa die doppelte Grundfläche von Düsseldorfer Paletten. Die Stapel sind bevorzugt so bemessen, dass vier Stapel auf eine Europalette und zwei Stapel auf eine Düsseldorfer Palette passen. Auf Europaletten bzw. Düsseldorfer Paletten werden die Stapel bevorzugt ohne rollbare Untersätze aufgesetzt.

Das für den Transport herkömmlicher Kästen auf Paletten eingesetzte Fördergerät (z.B. Gabelstapler) ist für den Transport der Stapel auf Paletten nutzbar.

Eine Ausgestaltung umfaßt Stapel auf fahrbaren bzw. rollbaren Untersätzen, die auf Paletten angeordnet sind. In dieser Anordnung sind mehrere Stapel auf einer einzigen Palette anordbar, z.B. vier Stapel. Die hierfür verwendeten Paletten sind bevorzugt speziell ausgestaltet, sodass die rollbaren Untersätze ohne weiteres auf die Paletten gerollt und an diesen arretierbar sind. Hierfür weisen die Paletten z.B. mehrere parallele schienenartige Bereiche auf, die zu den Rändern hin geöffnet sind, sodass die rollbaren Untersätze nahezu ebenerdig auf die schienenartigen Bereiche aufrollbar sind. Die oberen Ränder der schienenartigen Bereiche sind miteinander verbunden. Unter diese Bereiche kann ein Stapler mit seinen Greifarmen greifen. Diese Paletten weisen z.B. die für den Transport maßgeblichen Abmessungen von Europaletten auf, sodass herkömmliche Fördergeräte für deren Transport nutzbar sind. Für Hartwall®-Träger sind derartige Paletten, die auch als "Adapterpaletten" bezeichnet werden, bekannt geworden.

Eine Ausgestaltung umfaßt neben Verkaufsregalen und/oder dem Kassenbereich und/oder in Getränkeabteilungen angeordnete Stapel. Die Verfahrbarkeit und die verhältnismäßig geringe Größe der Stapel ermöglicht eine flexible Positionierung.

Gemäß einer Ausgestaltung werden entleerte Mehrwegflaschen mit oder ohne Umverpackungen unsortiert auf dieselben Träger gesetzt. Eine herstellersortenreine Sortierung erübrigt sich, weil die Etiketten der Flaschen erneuert bzw. Umverpackungen ggfs. ausgetauscht bzw. entsorgt werden.

Gemäß einer Ausgestaltung werden Leergutstapel zu wahlfreien Zentrallagern und/oder von den Zentrallagern zu einer wahlfreien Abfüll- und Verpackungsstation transportiert. Aufgrund der Verwendung standardisierter Mehrwegflaschen und Träger ist ein ökonomischer Rücktransport, z.B. zu der nächstliegenden Abfüll- und Verpackungsstation möglich. Hierfür sind die Träger bevorzugt nicht herstellerindividualisiert und/oder mit einer entfernbaren und/oder überdeckbaren Herstellerindividualisierung versehen, die gegebenenfalls durch eine andere Herstellerindividualisierung ersetzbar ist.

Gemäß einer Ausgestaltung werden in der mindestens einen Abfüll- und Verpackungsstation gebrauchte Umverpackungen und Leergut voneinander getrennt.

Gemäß einer weiteren Ausgestaltung werden gebrauchte Umverpackungen recycelt und/oder entsorgt.

Gemäß einer weiteren Ausgestaltung werden entleerte Flaschen recycelt und/oder entsorgt.

Gemäß einer weiteren Ausgestaltung werden entleerte Flaschen gewaschen und neu etikettiert.

Eine Ausgestaltung umfaßt die Distribution von Einwegflaschen. Das erfindungsgemäße Verfahren bzw. System wird hierbei auch für die Distribution von Einwegflaschen genutzt. Diese Distribution kann beim Verbraucher enden. Sie kann aber auch das Einsammeln der Einwegflaschen an den Verkaufsstellen bzw. dem mindestens einen Zentrallager bzw. der mindestens einen Abfüll- und Verpackungsstation umfassen, um die Einwegflaschen einer Entsorgung bzw. einem Recycling zuzuführen.

Bei dem erfindungsgemäßen System können die Einrichtungen zum Befüllen der Mehrwegflaschen in Umverpackungen, Setzen der Umverpackungen auf Träger und Stapeln der Träger ganz oder teilweise automatisiert sein. Es ist aber auch möglich, ganz oder teilweise auf händische Verfahren bzw. auf eine durch Geräte (z.B. Gabelstapler zum Bilden von Stapeln) unterstützte händische Arbeitsweise zurückzugreifen.

Die Einrichtungen zum Transportieren der Vollgutstapel und Leergutstapel können insbesondere LKWs mit oder ohne Hebebühne sein. Grundsätzlich ist es auch möglich, auf andere Einrichtungen zum Transportieren zurückzugreifen, z.B. Bahn oder Schiff oder Flugzeug.

Die Erfindung wird nachfolgend anhand der anliegenden Zeichnungen von Ausführungsbeispielen näher erläutert. In den Zeichnungen zeigen:
- Fig. 1: der Warenkreislauf bei der erfindungsgemäßen Distribution von Getränken in Mehrwegflaschen in einer grobschematischen Übersicht;
- Fig. 2: ein Verkaufsregal gebildet aus Stapeln mit Trägern, Flaschen und Umverpackungen in einer Vorderansicht.

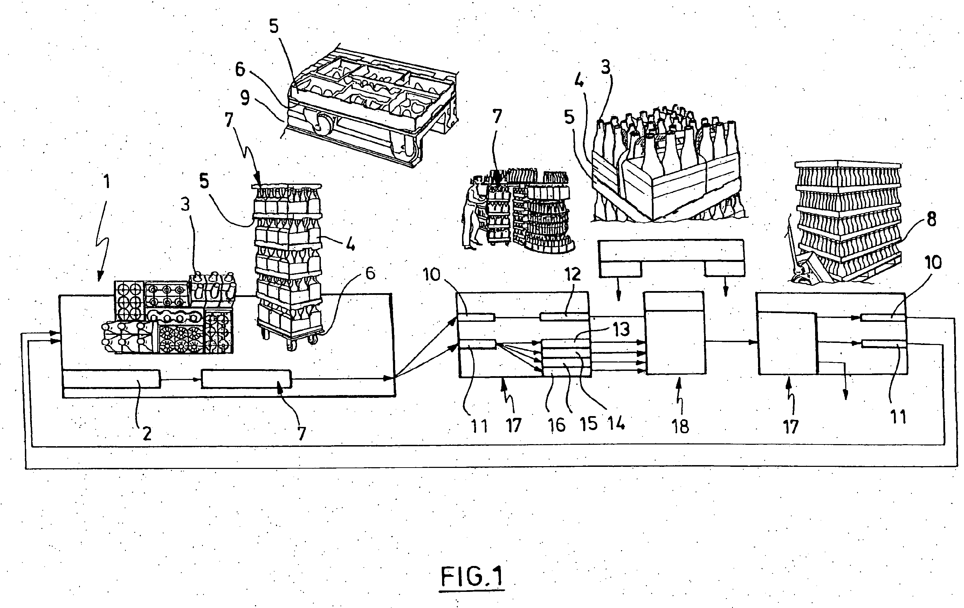

Gemäß Fig. 1 wird bei der erfindungsgemäßen Distribution von Mehrwegflaschen in einem ersten Schritt in einer Abfüll- und Verpackungsstation 1 Bier oder ein anderes Getränk aus einem Tank 2 in Flaschen 3 eingefüllt.

Es ist nur eine Abfüll- und Verpackungsstation 1 abgebildet. Das System kann jedoch mehrere derartige Stationen 1 umfassen. Jede Abfüll- und Verpackungsstation 1 ist entweder in einer Brauerei angeordnet oder wird von einer oder mehreren Brauereien mit Getränken beliefert.

Die Flaschen 3 werden in körbchenartige Umverpackungen 4 aus Karton mit Gefachen und Entnahmesicherung gesetzt.

Die Umverpackungen 4 werden auf Hartwall®-Trägern 5 angeordnet. Im Beispiel sind auf jedem Hartwall®-Träger 5 sechs Umverpackungen 4 mit jeweils sechs Flaschen 3 darin positioniert.

Fünf mit Umverpackung 4 befüllte Hartwall®-Träger 5 werden auf einem fahrbaren Untersatz 6 übereinandergestapelt. Oben wird zum Abschluß ein sechster Hartwall®-Träger 5 aufgesetzt.

Die Kombination aus fahrbarem Untersatz 6, Hartwall®-Trägern 5, Umverpackungen 4 und Flaschen 3 bildet ein rollbares Regal 8.

Vier Regale 8 werden auf einer Europalette 8 oder auf einer Adapterpalette 9 angeordnet und von einem Spediteur zu einem Zentrallager 10 des Handels oder zum Getränkefachgroßhandel 11 transportiert.

Vom Zentrallager 10 des Handels aus transportiert ein Spediteur die Ware an Handelsfilialen 12.

Vom Getränkefachgroßhandel 11 aus transportiert ein Spediteur die Ware an die Gastronomie 13, Tankstellen 14, den Lebensmitteleinzelhandel auf Strecke 15 oder an den freien Lebensmitteleinzelhandel 16.

Der Verkauf erfolgt direkt aus den rollbaren Regalen 7, die in den Verkaufsstellen 17 zu geeigneten Verkaufspunkten ("point of sale") gerollt werden.

In den genannten Verkaufsstellen 17 kauft der Verbraucher Flaschen 3 in Umverpackungen 4. Entleerte Flaschen 3 gibt er in den Umverpackungen 4 an die Verkaufsstellen 17 zurück.

Der Rücktransport des Leerguts 3 erfolgt ebenfalls in den rollbaren Regalen 7' z.B. auf Europaletten 8 mit oder ohne Umverpackungen 4.

Von den Verkaufsstellen 17 werden die rollbaren Regale 7' von einem Spediteur an die Zentrallager 10 bzw. den Getränkefachgroßhandel 11 zurückgebracht. Von dort gelangen sie durch einen Spediteur an eine frei wählbare Abfüll- und Verpackungsstation 1.

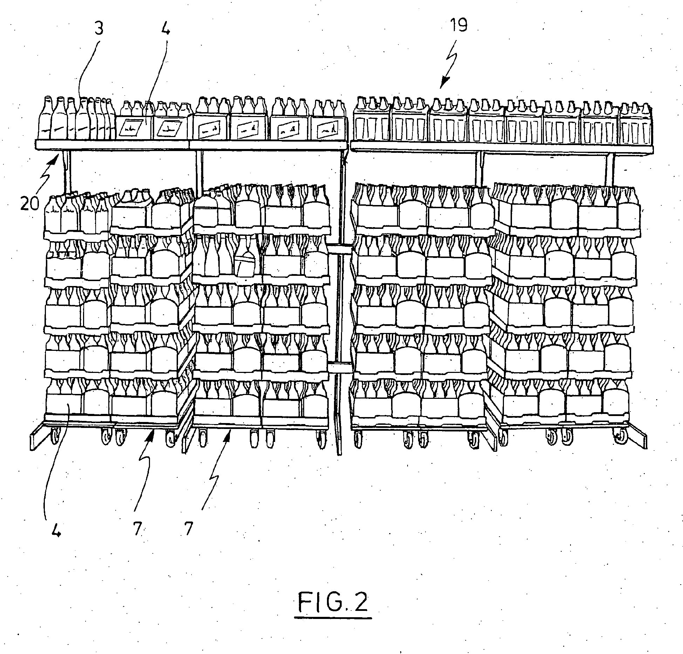

Gemäß Fig. 2 kann die Ware in den Verkaufsstellen 17 in einer Art Regalanordnung 19angeboten werden, die sich aus einem oder mehreren rollbaren Regalen 7 zusammensetzt. Im Beispiel sind vier Doppelregale mit Waren verschiedener Brauereien zusammengestellt. Den rollbaren Regalen 7 zugeordnet sind feste Regale 20, auf denen zusätzlich einige Umverpackungen 4 aus den darunter angeordneten rollbaren Regalen 7 präsentiert werden.

Die Abfüll- und Verpackungsstation 1 befindet sich bevorzugt in einem Gebiet mit hoher Bevölkerungsdichte. Hier befinden sich die Hauptwaren- und Leergutströme und entsprechend auch die Zentrallager des Lebensmitteleinzelhandels.

Mit der Errichtung der Abfüll- und Verpackungsstation 1 in der Nähe der Zentrallager 10 vermeidet man erstmals, daß Voll- und Leergüter über große Distanzen zu den Verbrauchern gebracht werden. Die Getränke können in Tanks von regionalen und überregionalen Brauereien zur übergeordneten Abfüll- und Verpackungsstation 1 transportiert, dort verkaufsfertig abgefüllt und verpackt und über die Zentrallager 10 vor Ort in die Verkaufsstellen 17 der Region gebracht werden. Ebenfalls erfolgt der Rücktransport des Leergutes zur Abfüllung regional zur übergeordneten Abfüll- und Verpackungsstation 1 und nicht überregional zu den Brauereien.

Auflieger mit Tankbier haben eine wesentlich höhere Transportkapazität als in Flaschen abgefüllte Ware, so daß nur noch Tankbier die langen Transportwege zurücklegen muß. Voll- und Leerflaschen legen nur kurze Wege über die übergeordnete Abfüll- und Verpackungsstation 1, die Zentrallager 10 und die Verkaufsstellen 17 vor Ort zurück.

Neben den Einsparungen an Treibstoffen haben die eingeschränkten Transporte auch eine Verringerung der Transportkosten zur Folge. Das Verfahren schont somit die Ressourcen und vermindert die Belastungen der Umwelt durch Emission von CO₂ und Feinstaub durch verminderten Transportmitteleinsatz.

Bevorzugt werden mehrere Abfüll- und Verpackungsstationen 1 in verschiedenen Ballungszentren angeordnet, um die jeweiligen Zentrallager 10 mit möglichst geringem Aufwand zu versorgen. Die Erfindung umfaßt auch die Möglichkeit, übergeordnete Abfüll- und Verpackungsstationen in Kombination mit Abfüll- und Verpackungsstationen in einzelnen Brauereien vorzusehen.

Durch übergeordnete Abfüll- und Verpackungsstationen 1 ist es möglich, Leistungen zu bündeln und die Brauereien zu entlasten. Insbesondere die Bereiche Lager, Versand und Abrechnung, aber auch Leergutredistribution, Sortierung und das Pfandclearing werden zentral in den übergeordneten Abfüll- und Verpackungsstationen 1 durchgeführt und nicht mehr bei den Brauereien.

## Patentansprüche

1. Verfahren zum Distribuieren von Getränken in Mehrwegflaschen, bei dem
a.1. in mindestens einer Abfüll- und Verpackungsstation Getränke in standardisierte Mehrwegflaschen gefüllt,
a.2. die befüllten Mehrwegflaschen in herstellerindividualisierte Umverpackungen verpackt,
a.3. die Umverpackungen mit den darin enthaltenen Mehrwegflaschen auf standardisierte Träger gesetzt und
a.4. die Träger mit den darauf gesetzten Umverpackungen und den darin enthaltenen befüllten Mehrwegflaschen zu Vollgutstapeln übereinandergestapelt werden,
a.5. die Vollgutstapel von der mindestens einen Abfüll- und Verpackungsstation zu mindestens einem Zentrallager transportiert werden,
a.6. die Vollgutstapel von dem mindestens einen Zentrallager zu verschiedenen Verkaufsstellen transportiert werden,
a.7. die Vollgutstapel in den Verkaufsstellen aufgestellt werden, so daß Verbraucher Umverpackungen mit darin enthaltenen Mehrwegflaschen von den Trägern abnehmen und mitnehmen können und Verbraucher geleerte Mehrwegflaschen in Umverpackungen und/oder ohne Umverpackungen zu Verkaufsstellen zurückbringen können,
a.8. in den Verkaufsstellen die geleerten Mehrwegflaschen in Umverpackungen und/oder ohne Umverpackungen auf Träger gesetzt werden und die Träger mit den darauf gesetzten geleerten Mehrwegflaschen in Umkartons und/oder ohne Umkartons zu Leergutstapeln übereinander gestapelt werden,
a.9. die Leergutstapel von dem Verkaufsstellen zu dem mindestens einen Zentrallager transportiert werden und
a.10. die Leergutstapel von dem mindestens einen Zentrallager zu der mindestens einen Abfüll- und Verpackungsstation transportiert werden.

2. Verfahren nach Anspruch 1, bei dem mindestens eine Brauerei eine Abfüll- und Verpackungsstation aufweist.

3. Verfahren nach Anspruch 1 oder 2, bei dem Getränke von mindestens einer Brauerei zu mindestens einer übergeordneten Abfüll- und Verpackungsstation transportiert werden.

4. Verfahren nach Anspruch 3, bei dem die Getränke in Tanks von der mindestens einen Brauerei zu mindestens einer übergeordneten Abfüll- und Verpackungsstation transportiert werden.

5. Verfahren nach Anspruch 3 oder 4, bei dem mindestens eine übergeordnete Abfüll- und Verpackungsstation in der Nähe mindestens eines Zentrallagers und/oder in mindestens einem Zentrallager angeordnet ist.

6. Verfahren nach mindestens einem der Ansprüche 1 bis 5 mit standardisierten Mehrwegflaschen mit einem Füllvolumen von 0,33 Liter und/oder 0,5 Liter.

7. Verfahren nach einem der Ansprüche 1 bis 6 mit Mehrwegflaschen, die herstellerindividualisierte Etiketten aufweisen.

8. Verfahren nach Anspruch 7, bei dem die Etiketten von den Mehrwegflaschen ablösbar sind.

9. Verfahren nach einem der Ansprüche 1 bis 8, mit Flaschen aus Glas sind und/oder aus Kunststoff und/oder Einwegglas.

10. Verfahren nach einem der Ansprüche 1 bis 9 mit Umverpackungen, die einen Traggriff aufweisen.

11. Verfahren nach einem der Ansprüche 1 bis 10 mit entnahmegesicherten Umverpackungen.

12. Verfahren nach einem der Ansprüche 1 bis 11 mit Umverpackungen, die die Oberbereiche der Flaschen nicht bedecken.

13. Verfahren nach einem der Ansprüche 1 bis 12 mit körbchenartigen Umverpackungen.

14. Verfahren nach einem der Ansprüche 1 bis 13 mit Gefache aufweisenden Umverpackungen.

15. Verfahren nach einem der Ansprüche 1 bis 14 mit Umverpackungen, die einen herstellerindividualisierten Aufdruck aufweisen.

16. Verfahren nach einem der Ansprüche 1 bis 15 mit Umverpackungen, die eine herstellerindividualisierte Formgestaltung aufweisen.

17. Verfahren nach einem der Ansprüche 1 bis 16 mit aus Karton hergestellten Umverpackungen.

18. Verfahren nach einem der Ansprüche 1 bis 17 mit Trägern, die maximal etwa 5 cm hoch sind.

19. Verfahren nach einem der Ansprüche 1 bis 18 mit Trägern, die an der Oberseite Aufnahmen für Bodenbereiche von Flaschen und/oder Umverpackungen und an der Unterseite Aufnahmen für Kopfbereiche von Flaschen und/oder von Umverpackungen aufweisen.

20. Verfahren nach einem der Ansprüche 1 bis 19 mit Trägern, die komplementäre Oberseiten und Unterseiten aufweisen, sodass sie entleert in stabilen Stapeln aufeinanderstapelbar sind.

21. Verfahren nach einem der Ansprüche 1 bis 20 mit Hartwall-Trägern.

22. Verfahren nach einem der Ansprüche 1 bis 21 mit Trägern, auf denen nur eine Sorte Umverpackungen angeordnet ist.

23. Verfahren nach einem der Ansprüche 1 bis 22 mit Trägern, auf denen verschiedene Sorten Umverpackungen angeordnet sind.

24. Verfahren nach einem der Ansprüche 1 bis 23 mit Vollgutstapeln, in denen nur eine Sorte Umverpackungen angeordnet ist.

25. Verfahren nach einem der Ansprüche 1 bis 24 mit Vollgutstapeln, in denen mehrere Sorten Umverpackungen angeordnet sind.

26. Verfahren nach einem der Ansprüche 1 bis 25 mit Vollgutstapeln umfassend vier bis acht Träger, insbesondere sechs Träger.

27. Verfahren nach einem der Ansprüche 1 bis 26 mit Stapeln auf rollbaren Untersätzen.

28. Verfahren nach einem der Ansprüche 1 bis 27, bei dem Stapel auf Paletten gesetzt und die Paletten mit den darauf angeordneten Stapeln von der mindestens einen Abfüll- und Verpackungsstation zu dem mindestens einen Zentrallager und/oder von dem mindestens einen Zentrallager zu Verkaufsstellen und/oder in umgekehrter Richtung transportiert werden.

29. Verfahren nach einem der Ansprüche 1 bis 28 mit neben Verkaufsregalen und/oder neben den Kassenbereichen und/oder in Getränkeabteilungen der Verkaufsstellen angeordneten Stapeln.

30. Verfahren nach einem der Ansprüche 1 bis 29, bei dem entleerte Träger übereinandergestapelt werden.

31. Verfahren nach einem der Ansprüche 1 bis 30, bei dem entleerte Flaschen unsortiert auf dieselben Träger gesetzt werden.

32. Verfahren nach einem der Ansprüche 1 bis 31, bei dem in der mindestens einen Abfüll- und Verpackungsstation gebrauchte Umverpackungen und Leergut voneinander getrennt werden.

33. Verfahren nach einem der Ansprüche 1 bis 32, bei dem gebrauchte Umverpackungen recycelt und/oder entsorgt werden.

34. Verfahren nach einem der Ansprüche 1 bis 33, bei dem entleerte Flaschen recycelt und/oder entsorgt werden.

35. Verfahren nach Anspruch 34, bei dem entleerte Flaschen gewaschen und neu etikettiert werden.

36. Verfahren nach einem der Ansprüche 1 bis 35 umfassend Einwegflaschen.

37. System zum Distribuieren von Getränken in Mehrwegflaschen mit:
b.1. standardisierten Mehrwegflaschen (3),
b.2. standardisierten Trägern (5),
b.3. herstellerindividualisierten Umverpackungen (4),
b.4. mindestens eine Abfüll- und Verpackungsstation (1) mit Einrichtungen zum Befüllen von standardisierten Mehrwegflaschen (3) mit Getränken, Verpacken der befüllten Mehrwegflaschen (3) in herstellerindividualisierten Umverpackungen (4), Setzen der Umverpackungen (4) mit den darin enthaltenen Mehrwegflaschen (3) auf standardisierte Träger (5) und Stapeln der Träger (5) mit den darauf gesetzten Umverpackungen (4) und den darin enthaltenen Mehrwegflaschen (3) zu Vollgutstapeln (7),
b.5. mindestens ein Zentrallager (10,11),
b.6. Einrichtungen zum Transportieren von Vollgutstapeln (7) von der mindestens einen Abfüll- und Verpackungsstation (1) zu dem mindestens einen Zentrallager(10, 11),
b.7. verschiedenen Verkaufsstellen (17),
b.8. Einrichtungen zum Transportieren von Vollgutstapeln (7) von dem mindestens einen Zentrallager (10, 11) zu den Verkaufsstellen (17),
b.9. Einrichtungen zum Transportieren von Leergut enthaltenen Leergutstapeln (7') von Verkaufsstellen (17) zu dem mindestens einen Zentrallager (10, 11) und
b.10. Einrichtungen zum Transportieren von Leergutstapeln (7') von dem mindestens einen Zentrallager (10, 11) zu der mindestens einen Abfüll- und Verpackungsstation (1).

38. System nach Anspruch 37, bei dem mindestens eine Brauerei eine Abfüll- und Verpackungsstation aufweist.

39. System nach Anspruch 37 oder 38, bei dem Einrichtungen zum Transportieren von Getränken von mindestens einer Brauerei zu mindestens einer übergeordneten Abfüll- und Verpackungsstation vorhanden sind.

40. System nach Anspruch 39, bei dem die Einrichtungen zum Transportieren Tankwagen sind.

41. System nach einem der Ansprüche 37 bis 40, bei dem mindestens eine übergeordnete Abfüll- und Verpackungsstation in der Nähe mindestens eines Zentrallagers und/oder in mindestens einem Zentrallager angeordnet ist.

42. System nach einem der Ansprüche 37 bis 41, mit Mehrwegflaschen (3) mit einem Füllvolumen von 0,33 Liter und/oder 0,5 Liter.

43. System nach einem der Ansprüche 37 bis 42 mit Mehrwegflaschen (3), die herstellerindividualisierte Etiketten aufweisen.

44. System nach Anspruch 43 mit ablösbare Etiketten aufweisenden Mehrwegflaschen (3).

45. System nach einem der Ansprüche 37 bis 44 mit Mehrwegflaschen (3) aus Glas und/oder aus Kunststoff.

46. System nach einem der Ansprüche 37 bis 45 mit Umverpackungen (4) mit einem Traggriff.

47. System nach einem der Ansprüche 37 bis 46 mit entnahmegesicherten Umverpackungen (4).

48. System nach einem der Ansprüche 37 bis 47 mit Umverpackungen (4), die die Oberbereiche der Flaschen (3) nicht bedecken.

49. System nach einem der Ansprüche 37 bis 48 mit körbchenartigen Umverpackungen (4).

50. System nach einem der Ansprüche 37 bis 49 mit Gefache aufweisenden Umverpackungen (4).

51. System nach einem der Ansprüche 37 bis 50 mit Umverpackungen (4), die einen herstellerindividualisierten Aufdruck aufweisen.

52. System nach einem der Ansprüche 37 bis 51 mit Umverpackungen (4), die eine herstellerindividualisierte Formgestaltung aufweisen.

53. System nach einem der Ansprüche 37 bis 58 mit aus Karton hergestellten Umverpackungen (4).

54. System nach einem der Ansprüche 37 bis 53 mit Trägern (5), die maximal etwa 5 cm hoch sind.

55. System nach einem der Ansprüche 37 bis 54 mit Trägern (5), die an der Oberseite Aufnahmen für Bodenbereiche von Flaschen (3) und/oder von Umverpackungen (4) und an der Unterseite Aufnahmen für Kopfbereiche von Flaschen (3) und/oder von Umverpackungen (4) aufweisen.

56. System nach einem der Ansprüche 37 bis 55 mit Trägem (5), die komplementäre Oberseiten und Unterseiten aufweisen, sodass sie entleert in stabilen Stapeln aufeinander stapelbar sind.

57. System nach einem der Ansprüche 37 bis 56 mit Hartwall-Trägern (5).

58. System nach einem der Ansprüche 37 bis 57 mit Trägern (5), auf denen nur eine Sorte Umverpackungen (4) angeordnet ist.

59. System nach einem der Ansprüche 37 bis 58 mit Trägern (5), auf denen verschiedene Sorten Umverpackungen (4) angeordnet sind.

60. System nach einem der Ansprüche 37 bis 59 mit Vollgutstapeln (7), in denen nur eine Sorte Umverpackungen (4) angeordnet ist.

61. System nach einem der Ansprüche 37 bis 60 mit Vollgutstapeln (7), in denen mehrere Sorten Umverpackungen (4) angeordnet sind.

62. System nach einem der Ansprüche 37 bis 61 mit Vollgutstapeln (7) umfassend vier bis acht Träger (5), insbesondere sechs Träger.

63. System nach einem der Ansprüche 37 bis 62 mit Stapeln (7) auf rollbaren Untersätzen (6).

64. System nach einem der Ansprüche 37 bis 63 mit Stapeln (7) auf Paletten (8, 9).

65. System nach einem der Ansprüche 37 bis 64 umfassend Einwegflaschen.
